# DEMANDE DE BREVET EUROPEEN

(11) **EP 2 116 414 A1**
(43) Date de publication de la demande: **11.11.2009**
(21) Numéro de dépôt: 09159394.7
(22) Date de dépôt: 05.05.2009
(51) Int. Cl.: B60N 2/24, B60N 2/68, B61D 33/00

(54) **Siège de véhicule de transport et véhicule associé**

(30) Priorité: 06.05.2008 FR 0853006
(71) Demandeur: ALSTOM Transport SA, 92300 Levallois-Perret (FR)
(72) Inventeur: Cutcliffe, David, 08810 BARCELONA (ES); Vannier, Carole, 75017 PARIS (FR)
(74) Mandataire: Jacobson, Claude

(57) **Abrégé**

L'invention concerne un siège (1, 2) comprenant une structure porteuse (4) comportant une partie structurelle (10) adaptée pour supporter un élément de support d'assise (6), et un élément de support de dossier (8), la partie structurelle (10) reposant sur un piètement (3). La partie arrière et les parties latérales (40) de la partie structurelle (10) sont recouvertes par une pièce d'habillage rigide.

## Description

La présente invention concerne un siège de véhicule de transport et en particulier un siège de véhicule ferroviaire.

Un siège de véhicule ferroviaire comprend généralement une coque structurelle. Cette coque forme la structure porteuse du siège et fait partie intégrante du design du siège. Cette coque visible comprend un panneau sensiblement horizontal de support de l'assise du siège, et un panneau sensiblement vertical de support du dossier du siège.

La coque du siège permet la fixation d'accoudoirs. Le support vertical du dossier s'étend sensiblement jusqu'à la moitié de la hauteur du siège ou jusqu'en haut du siège. Une tablette est articulée à la coque du siège. Les parties non structurelles de l'assise et du dossier sont recouvertes de coussins en mousses revêtus d'un revêtement d'habillage des mousses de confort du siège.

Toutefois, il n'est pas possible de modifier le style de l'arrière de ce siège en fonction des désirs de différents clients sans entraîner une redéfinition complète du siège. Il est uniquement possible de modifier l'aspect esthétique de l'avant du siège en modifiant l'aspect des mousses de confort, et la qualité des revêtements d'habillage. En particulier, pour modifier l'aspect esthétique de l'arrière du siège, il est nécessaire de réaliser un nouveau moulage de la coque du siège.

L'invention a pour but de proposer un siège dont l'esthétique peut être modifiée selon différents niveaux de personnalisation, sans surcoût excessif de production. A cet effet, l'invention a pour objet un siège comprenant une structure porteuse comprenant une partie structurelle adaptée pour supporter un élément de support d'assise, et un élément de support de dossier, la partie structurelle reposant sur un piètement, **caractérisé en ce que** la partie arrière et les parties latérales de la partie structurelle sont recouvertes par une pièce d'habillage rigide.

Suivant des modes particuliers de réalisation, le siège comporte l'une ou plusieurs des caractéristiques suivantes prise(s) isolément ou en combinaison :
- la partie structurelle comprend des rails de guidage des éléments de support de dossier et de l'assise ;
- la structure porteuse comprend des bras latéraux de support des accoudoirs et/ou d'une tablette du siège, lesdits bras latéraux de support étant les seules parties visibles de la structure porteuse du siège ;
- la face avant de la partie structurelle est dissimulée par un revêtement recouvrant l'élément de support de dossier et l'élément de support d'assise ;
- la pièce d'habillage rigide comprend au moins une coque rigide comprenant un panneau de fond et deux panneaux latéraux ;
- la pièce d'habillage rigide recouvre en outre la partie arrière et les parties latérales de la partie structurelle, ladite partie arrière et lesdites parties latérales étant disposées au-dessus des bras latéraux ; et
- la coque est réalisée dans un matériau parmi un matériau en matière plastique, un matériau en matière textile, un matériau en verre, un matériau à base de fibres de cellulose, un matériau recouvert de fibre optique, un matériau en aluminium, et un matériau à base de bois.

L'invention concerne également un siège de véhicule de transport comprenant au moins un siège du type précité.

L'invention sera mieux comprise à la lecture de la description qui va suivre, donnée uniquement à titre d'exemple et faite en se référant aux dessins annexés, sur lesquels :
- la figure 1 est une vue en perspective de la structure d'un couple de sièges ;
- la figure 2 est une vue en perspective du couple de sièges illustré sur la figure 1, intégrant des coussins d'assise et de dossier ; et
- la figure 3 est une vue en perspective du couple de sièges illustré sur la figure 1, illustrant une personnalisation possible du couple de sièges équipé de différents habillages.

Dans cette description, les termes « avant », « arrière », « haut » et « bas » sont définis par rapport à la position usuelle d'un siège.

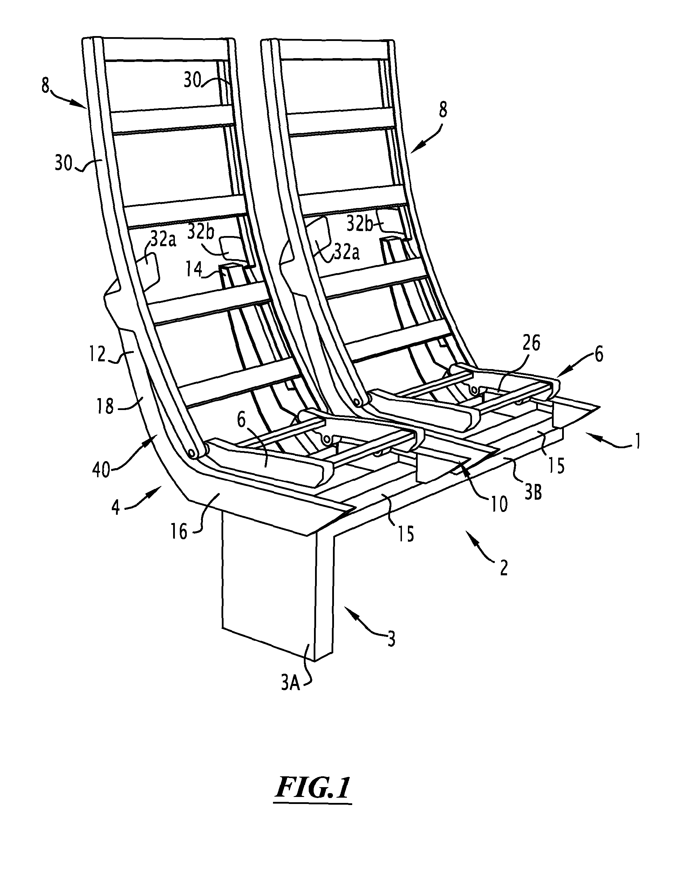

En référence à la figure 1, un couple de deux sièges 1, 2 adjacents est monté sur un piètement 3 en forme de L. Un côté du couple de sièges 1, 2 est destiné à être fixé à une paroi intérieure d'un véhicule ferroviaire, l'autre côté du couple de sièges étant en appui sur la branche 3A la plus courte du piètement 3.

Bien que les figures représentent un couple de sièges, l'invention concerne également un unique siège.

Chaque siège 1, 2 comprend une structure porteuse 4 propre à porter un élément de support d'assise 6 et un élément de support de dossier 8. Ces éléments de support présentent une forme de cadre.

La structure porteuse 4 comprend une partie structurelle 10 non pleine comprenant une partie s'étendant horizontalement et une partie s'étendant sensiblement verticalement, par exemple une armature métallique, formée de deux longerons 12, 14 reliés par deux entretoises 15. Les longerons 12, 14 sont courbés sensiblement en leur centre d'un angle d'environ 90° pour présenter une partie 16 s'étendant horizontalement et une partie 18 s'étendant sensiblement verticalement.

La partie structurelle 10 est la partie structurelle de l'assise et du dossier du siège.

La partie structurelle 10 repose sur un piètement 3. Plus particulièrement, la partie structurelle 10 de chaque siège 1, 2 est solidarisée à la branche 3B la plus longue du piètement 3.

Les éléments de support d'assise 6 et de support de dossier 8 sont adaptés pour recevoir les éléments de confort du siège (mousses de confort, recouverts d'un élément esthétique), sur lesquels viennent s'asseoir les passagers. Les éléments de support d'assise 6 et de support de dossier 8 reposent sur la partie structurelle 10.

Ces éléments sont soit mobiles dans le cas d'un siège inclinable, soit fixes.

Dans le cas d'un siège inclinable, comme représenté, les éléments de support de dossier et d'assise sont guidés dans des rails 26 formés dans la partie structurelle 10. L'élément de support de dossier 8 est rectangulaire et légèrement arqué par rapport à son plan médian. L'élément de support de dossier 8 comprend deux montants 30 dont les extrémités inférieures sont articulées à deux montants des extrémités de l'élément de support d'assise 6.

La structure porteuse 4 comprend, outre la partie structurelle 10, des bras latéraux de support 32a et 32b qui s'étendent vers l'arrière du siège 2. Ces bras latéraux de support 32a, 32b constituent les uniques pièces invariantes du design de la structure porteuse 4 du siège. Les bras latéraux de support 32a et 32b sont adaptés pour supporter les accoudoirs 44 et/ou une tablette 46.

Les bras latéraux de support 32a et 32b sont les seules parties structurelles de la structure porteuse du siège 4 qui sont visibles. En d'autres termes, les bras latéraux de support 32a, 32b sont les seules parties non recouvertes soit d'un revêtement 34 soit d'une pièce d'habillage 36.

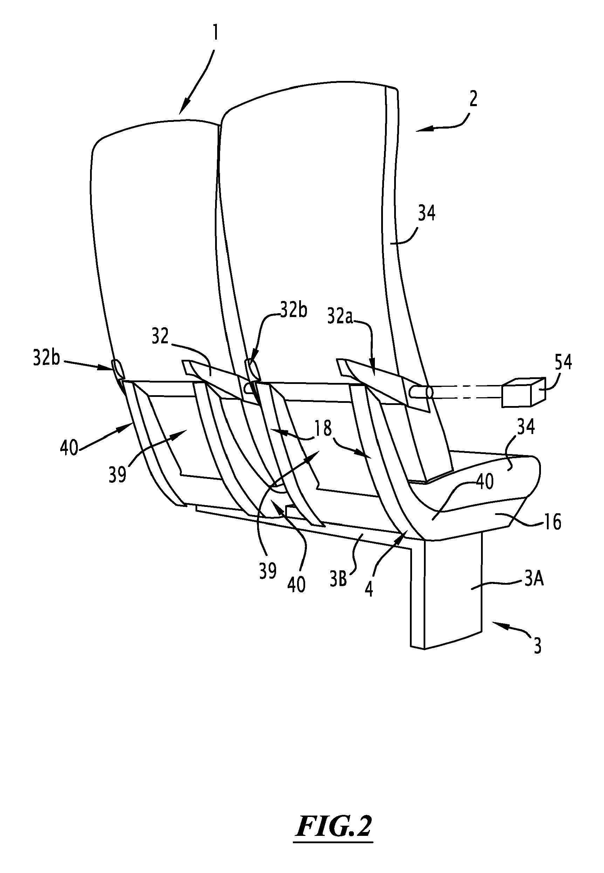

Sur la figure 2, l'élément de support de dossier 8 et l'élément de support d'assise 6 de chaque siège du couple de sièges 1, 2, ont été recouverts de mousses aussi appelées éléments de confort de chaque siège, et d'un revêtement 34. Le revêtement 34 recouvre également le dessus de la partie structurelle 10, c'est à dire la face de la partie structurelle 10 sur laquelle la personne repose. Par conséquent, la face avant de la partie structurelle 10 est dissimulée par le revêtement 34.

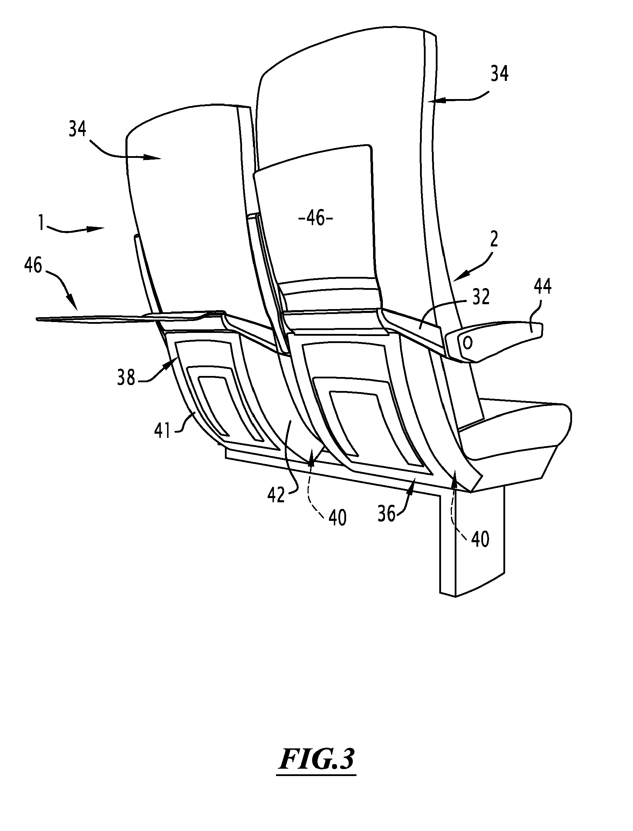

La figure 3 représente le même couple de sièges 1, 2 équipés de pièces d'habillage.

En particulier, le siège 2 est revêtu d'une pièce d'habillage 36 formée par une coque de style adaptée pour revêtir au moins la partie arrière 39 de la partie structurelle 10, c'est-à-dire une partie de la face opposée à la face sur laquelle la personne repose, et les parties latérales 40 de la partie structurelle 10.

La référence 39 désigne toute la portion de la partie structurelle 10 qui est opposée à la face (dossier et assise) sur laquelle repose le voyageur. Cette référence 39 comprend donc le dessous de la partie structurelle 10.

Sur la figure 3, la pièce d'habillage 36 est apte à recouvrir la partie arrière 39 et les parties latérales 40 de la partie structurelle 10 pour la dissimuler.

La pièce d'habillage 36 est une coque rigide constituée par un panneau de fond 41 et deux panneaux latéraux 42 propres à être fixés sur la partie structurelle 10.

La pièce d'habillage 36 comprend au moins une pièce d'habillage adaptée pour recouvrir la partie arrière 39 et les parties latérales 40 de la partie structurelle 10 s'étendant en dessous des bras latéraux de support 32a et 32b.

En variante, la pièce d'habillage comprend une seconde coque adaptée pour recouvrir la partie haute arrière et les parties latérales hautes du siège, s'étendant au dessus des bras latéraux de support 32a et 32b.

Une pièce d'habillage peut consister en un assemblage de plusieurs coques rigides.

Ces coques rigides peuvent également être réalisées dans différents types de matériaux (matériaux plastiques, textile, cuir, bois...).

Une pièce d'habillage 36 est choisie par le client, parmi plusieurs pièces de design différent, et est montée sur la partie structurelle 10.

Comme la partie structurelle 10 est non pleine, une coque constituant une pièce d'habillage adaptée pour recouvrir les pièces latérales et arrières de la partie structurelle 10, peut comporter un évidement dans le panneau de fond de ladite coque. Ledit évidement est adapté pour être positionné contre une partie vide de la partie structurelle 10.

Avantageusement, selon l'invention la partie arrière 39 et les parties latérales 40 sont personnalisées par la modification de la forme de la pièce d'habillage.

Les pièces d'habillage comprennent en outre des accessoires tels qu'un accoudoir 44, une tablette 46.

Chaque accoudoir 44 est fixé aux bras latéraux de support 32a et 32b adjacents au montant 30 du cadre de dossier. La tablette 46 est fixée et articulée aux bras latéraux de support 32a, 32b.

Les bras latéraux de support 32a, 32b présentent une forme adaptée pour être une pièce de finition esthétique que l'accoudoir 44 et la tablette 46 soient ou non montés sur le siège 1, 2.

Les bras latéraux de support 32a, 32b sont partiellement dissimulés soit par un accoudoir 44 et une tablette 46 soit par des caches 54 uniquement dédiés à cet effet lorsque aucune tablette ou aucun accoudoir n'est fixé au siège.

Ainsi, un plot de fixation 50 de l'accoudoir 44 est recouvert d'un cache 54, représenté schématiquement sur la figure 2, propre à le dissimuler lorsque l'accoudoir 44 n'est pas fixé aux bras latéraux de support 32a, 32b.

De la même façon, un cache non représenté est prévu pour recouvrir le moyen de fixation de la tablette 46 lorsque cette tablette n'est pas montée sur le siège 2.

En variante, la pièce d'habillage 36 est réalisée dans un matériau, un matériau en fibre de verre, un matériau à base de fibres de cellulose, un matériau à base de bois, un matériau rigide recouvert de fibre optique, et un matériau en aluminium.

Ainsi, les sièges selon l'invention peuvent être personnalisés par l'ajout de pièces d'habillage de formes différentes en fonction des besoins du client, sans modifier la structure du siège.

Avantageusement, cette invention permet de standardiser la fabrication de la structure du siège tout en permettant la personnalisation de celui-ci en fonction des demandes des clients.

L'ensemble des éléments structurels du siège sont intégrés dans des parties non visibles, ce qui permet de proposer différents design sur une même base technique. Les éléments invariants (non modifiables) étant limités aux bras latéraux de support 32a, 32b, lesdits bras latéraux de support 32a, 32b permettant de fixer les accoudoirs et la tablette. L'ensemble des éléments constituant le siège : arrière, assise, dossier, et accessoires deviennent personnalisables.

## Revendications

1. Siège (1, 2) comprenant une structure porteuse (4) comportant une partie structurelle (10) adaptée pour supporter un élément de support d'assise (6), et un élément de support de dossier (8), la partie structurelle (10) reposant sur un piètement (3), **caractérisé en ce que** la partie arrière (39) et les parties latérales (40) de la partie structurelle (10) sont recouvertes par une pièce d'habillage rigide (36).

2. Siège (1, 2) selon la revendication 1, dans lequel la partie structurelle (10) comprend des rails (26) de guidage des éléments de support de dossier (8) et de l'assise (6).

3. Siège (1, 2) selon l'une quelconque des revendications précédentes, dans lequel la structure porteuse (4) comprend des bras latéraux (32a, 32b) de support des accoudoirs (44) et/ou d'une tablette (46) du siège, lesdits bras latéraux de support (32a, 32b) étant les seules parties visibles de la structure porteuse (4) du siège.

4. Siège (1, 2) selon l'une quelconque des revendications précédentes, dans lequel la face avant de la partie structurelle (10) est dissimulée par un revêtement (34) recouvrant l'élément de support de dossier (8) et l'élément de support d'assise (6).

5. Siège (1, 2) selon l'une quelconque des revendications précédentes, dans lequel la pièce d'habillage rigide (36) comprend au moins une coque rigide comprenant un panneau de fond (41) et deux panneaux latéraux (42).

6. Siège (1, 2) selon l'une quelconque des revendications 3 à 5, dans lequel la pièce d'habillage rigide (36) recouvre en outre la partie arrière (39) et les parties latérales de la partie structurelle (10), ladite partie arrière (39) et lesdites parties latérales étant disposées au-dessus des bras latéraux (32a, 32b).

7. Siège (1, 2) selon l'une quelconque des revendications 5 et 6, dans lequel la coque (36) est réalisée dans un matériau parmi un matériau en matière plastique, un matériau en matière textile, un matériau en verre, un matériau à base de fibres de cellulose, un matériau recouvert de fibre optique, un matériau en aluminium, et un matériau à base de bois.

8. Véhicule de transport comprenant au moins un siège (1, 2) selon l'une quelconque des revendications précédentes.
